# EUROPÄISCHE PATENTSCHRIFT

(11) **EP 2 480 799 B1**
(45) Veröffentlichungstag und Bekanntmachung des Hinweises auf die Patenterteilung: **21.05.2014**
(21) Anmeldenummer: 10759614.0
(22) Anmeldetag: 22.09.2010
(51) Int. Cl.: B60G 11/14, B60G 11/16, F16F 1/12

(54) **FEDERUNTERLAGE UND VERFAHREN ZUM HERSTELLEN DERSELBEN**
SPRING SUPPORT AND METHOD FOR PRODUCING THE SAME
SUPPORT À RESSORT ET PROCÉDÉ POUR LA FABRICATION DE CE SUPPORT

(30) Priorität: 25.09.2009 DE 102009045038
(43) Veröffentlichungstag der Anmeldung: 01.08.2012
(73) Patentinhaber: Tilko, Dietert, 91710 Gunzenhausen (DE)
(72) Erfinder: DIETERT, Tilko, 91710 Gunzenhausen (DE)
(74) Vertreter: Mielke, Klaus
(86) Internationale Anmeldenummer: PCT/EP2010/063976
(87) Internationale Veröffentlichungsnummer: WO 2011/036177

(56) Entgegenhaltungen:
- DE-A1- 19 808 909
- DE-A1-102005 062 825
- DE-A1-102007 050 084
- US-A1- 2007 013 161

## Beschreibung

### Gebiet der Erfindung

Die Erfindung betrifft eine Federunterlage, insbesondere für ein Federlager eines Kraftfahrzeugs, und ein Verfahren zum Herstellen einer solchen Federunterlage.

### Stand der Technik

Aus der Technik sind Federunterlagen bekannt, die zur Aufnahme der Stoßdämpferfeder an der Karosserie (am Federbeindom) eines Kraftfahrzeugs dienen und in der Mitte ein Loch enthalten, durch das der Stoßdämpfer geführt wird. Die bekannten Federunterlagen bestehen aus einem massiven Thermoplastformteil mit Materialdicken von bis zu 17 mm, an dem ein ebenfalls sehr massives Elastomerbauteil im Einlegeverfahren angespritzt ist und somit formschlüssig an dem Thermoplastformteil gehalten wird. Die Thermoplastkomponente dient hierbei der korrekten Platzierung der Federunterlage im Federbeindom und gibt der Elastomerkomponente, insbesondere an den Seiten, Halt, während die Elastomerkomponente selbst ein Ende der Stoßdämpferfeder aufnimmt und Geräusche beim Einfedern des Kraftfahrzeugs verhindert.

Durch die hohen Materialdicken der bekannten Federunterlage ist diese sehr schwer und weist durch den Materialeinsatz und die erforderlichen langen Kühl- bzw. Vulkanisierzeiten hohe Herstellungskosten auf. In die Federunterlage eingebrachte Aussparungen reduzieren das Gewicht und die Masseanhäufungen nur gering, jedoch sind weitere Aussparungen aus werkzeugtechnischen Gründen nicht möglich, ohne die Festigkeit der Unterlage in unzulässiger Weise zu reduzieren.

Ein weiteres Beispiel einer Federunterlage ist in der EP-B-0 924 445 offenbart, wobei die in diesem Dokument beschriebene Federunterlage einen scheibenförmigen Körper aus elastomerem Material und eine in diesem elastomeren Körper eingebettete Verstärkungseinlage aus Kunststoff aufweist.

Die DE 10 2007 050 084 A1 offenbart eine Abstützung für eine Schraubendruckfeder, die eine Federunterlage gemäß dem Oberbegriff des unabhängigen Anspruchs 1 zeigt.

Die US 2007/0013161 A1 offenbart ein Aufhängungssystem mit einer variablen Steifigkeit, bei dem auch eine Federunterlage zum Einsatz kommt.

### Darstellung der Erfindung

Der Erfindung liegt die Aufgabe zugrunde, eine Federunterlage, insbesondere für ein Federlager eines Kraftfahrzeugs, die einfach und kostengünstig hergestellt werden kann, sowie ein Verfahren zum Herstellen einer solchen Federunterlage bereitzustellen.

Diese Aufgabe wird durch eine Federunterlage mit den Merkmalen des Anspruchs 1 sowie ein Verfahren mit den Merkmalen des Anspruchs 8 gelöst. Vorteilhafte Ausführungsformen folgen aus den übrigen Ansprüchen.

Die Federunterlage gemäß der Erfindung umfasst ein ringförmiges Halteelement aus einem thermoplastischen Kunststoff und ein Federauflageelement aus einem elastomeren Kunststoff, das an dem Halteelement angebracht ist, wobei das Halteelement wenigstens einen geschlossenen Hohlraum aufweist. Das Halteelement dient hierbei der geeigneten Anordnung der Federunterlage, beispielsweise in einem Federbeindom, und der Halterung des Federauflageelements, während das Federauflageelement an einem Ende einer entsprechenden Feder, beispielsweise einer Stoßdämpferfeder, anliegt. Der Begriff "geschlossener Hohlraum" bezeichnet einen Hohlraum, der vollständig oder zumindest größtenteils von einem thermoplastischen Material umgeben ist. Beispielsweise kann der erfindungsgemäße Hohlraum eine oder mehrere Öffnungen, wie z.B. Injektionsöffnungen, aufweisen, die nach dem Injektionsvorgang, beispielsweise mit entsprechenden Abdeckungen aus thermoplastischem Kunststoff, verschlossen werden, um so zumindest einen geschlossenen Hohlraum ohne Öffnungen auszubilden. Das Halteelement der erfindungsgemäßen Federunterlage ist folglich als geschlossener Hohlkörper ausgebildet. Ein solcher Hohlkörper kann bei gleichen Außenabmessungen sowie gleichmäßiger und ausreichender Wandstärke (Wanddicke) die gleiche Festigkeit aufweisen wie ein massiver Körper. Somit bietet die Federunterlage gemäß der Erfindung eine Stabilität und Lebensdauer, die mit denen der aus der Technik bekannten massiven Federunterlagen vergleichbar ist. Das Vorsehen eines Hohlraums in dem Halteelement bietet jedoch eine erhebliche Materialersparnis und Gewichtsverringerung der Federunterlage sowie die weiter unten angeführten Vorteile bei der Herstellung.

Vorzugsweise ist der wenigstens eine geschlossene Hohlraum vollständig von thermoplastischem Material mit im Wesentlichen einheitlicher Dicke (Wandstärke) umgeben. Fertigungsbedingt kann es dabei zu geringen Materialanhäufungen in den axialen Kantenbereichen des Bauteils oder benachbart zu Durchgangsöffnungen kommen. Unter einer im Wesentlichen einheitlichen Dicke der den Hohlraum umgebenden Wände wird hier daher ein Bauteil verstanden, bei dem die Wandstärke der den Hohlraum radial oder axial, bspw. benachbart zu Durchgangsöffnungen, angeordneten Wände, abgesehen von den zuvor genannten Materialanhäufungen, einheitlich ist. Auf diese Weise kann eine besonders hohe Stabilität und Lebensdauer der Federunterlage gewährleistet werden.

Nach einer bevorzugten Ausführungsform der Erfindung weist das Halteelement wenigstens eine Durchgangsöffnung oder ein Sackloch auf. Die wenigstens eine Durchgangsöffnung kann zum Durchführen eines Befestigungselements, wie z.B. eines Bolzens oder einer Schraube, und somit zum Anbringen der Federunterlage, beispielsweise an einem Federbeindom, geeignet und dimensioniert sein. Alternativ kann ein Sackloch zur Aufnahme einer aus dem Federbeindom herausragenden Schraube dienen, wobei gleichzeitig eine Grobfixierung der Federunterlage in der richtigen Einbaulage erreicht werden kann. Eine Durchgangsöffnung im Halteelement kann auch beim Umspritzen mit dem Elastomer durch einen Elastomerzapfen ausgefüllt werden, um eine formschlüssige Verbindung des Elastomers mit dem thermoplastischen Halteelement zu erreichen. Bevorzugt weist das erfindungsgemäße Halteelement mehrere Durchgangsöffnungen auf, die beispielsweise entlang des Umfangs des ringförmigen Halteelements voneinander beabstandet angeordnet sein können. Falls das Halteelement wenigstens zwei Durchgangsöffnungen aufweist, sind vorzugsweise wenigstens zwei geschlossene Hohlräume in dem Halteelement vorgesehen, die durch die wenigstens zwei Durchgangsöffnungen voneinander getrennt sind. Es ist jedoch auch möglich mehr als zwei Durchgangsöffnungen und dementsprechend mehr als zwei durch die Durchgangsöffnungen voneinander getrennte geschlossene Hohlräume vorzusehen. Auf diese Weise können Schwachstellen in der Umgebung der Durchgangsöffnungen, wie beispielsweise Variationen der Wandstärke des Halteelements, vermieden und somit eine besonders hohe Stabilität und Lebensdauer der Federunterlage gewährleistet werden.

Nach einer bevorzugten Ausführungsform sind das Halteelement und das Federauflageelement formschlüssig oder stoffschlüssig miteinander verbunden. Auf diese Weise kann eine dauerhafte und robuste Verbindung dieser Komponenten erzielt werden, die auch größeren von außen auf die Federunterlage ausgeübten Kräften standhält.

Vorzugsweise ist der wenigstens eine geschlossene Hohlraum mit einem Gas, wie z.B. Luft, gefüllt. Dadurch kann eine erhebliche Gewichtsverringerung der Federunterlage verglichen mit einer Unterlage, die ein massives Halteelement umfasst, erreicht werden. Des Weiteren lässt sich eine solche Federunterlage mit aus der Technik bekannten Verfahren einfach herstellen, wie weiter unten ausführlich beschrieben wird.

Alternativ kann der wenigstens eine geschlossene Hohlraum auch teilweise oder vollständig mit einem möglichst stark aufgeschäumten Material gefüllt sein. Falls der erfindungsgemäße Hohlraum eine Öffnung, wie z.B. eine Injektionsöffnung, aufweist, kann auf diese Weise das Eindringen von Feuchtigkeit, Verschmutzungen oder Fremdkörpern in das Innere des Halteelements bei der Verwendung der Federunterlage zuverlässig vermieden werden.

Vorzugsweise besteht das Federauflageelement aus einem thermoplastischen Elastomer. In diesem Fall kann die Federunterlage besonders einfach und kostengünstig auf vollautomatische Weise in einem Zweikomponenten-Spritzgießverfahren hergestellt werden. Um den nötigen Druckverformungsrest sicherzustellen, kann das thermoplastische Elastomer beim Aushärten chemisch vernetzt oder anschließend strahlenvernetzt werden.

Des Weiteren stellt die Erfindung ein Verfahren zum Herstellen einer Federunterlage, insbesondere für ein Federlager eines Kraftfahrzeugs, bereit, wobei die Federunterlage ein ringförmiges Haltelement aus einem thermoplastischen Kunststoff und ein Federauflageelement aus einem elastomeren Kunststoff, das an dem Halteelement angebracht ist, umfasst und das Verfahren die folgenden Schritte beinhaltet: Einbringen einer Schmelze eines thermoplastischen Kunststoffmaterials in ein Spritzgießwerkzeug, wobei das Spritzgießwerkzeug wenigstens zwei Werkzeugkerne zum Ausbilden von wenigstens zwei Durchgangsöffnungen in dem thermoplastischen Kunststoffmaterial aufweist, Injizieren eines Aufweitungsmaterials zum Ausbilden eines geschlossenen Hohlraums in die Schmelze des thermoplastischen Kunststoffmaterials und Anbringen eines elastomeren Kunststoffmaterials an das thermoplastische Kunststoffmaterial. Hierbei werden während des Schritts des Injizierens des Aufweitungsmaterials die wenigstens zwei Werkzeugkerne, beispielsweise durch eine Hochleistungskühlung (Hochleistungs-Hot-Spot-Kühlung), gekühlt und wird das Aufweitungsmaterial getrennt (einzeln) in durch die wenigstens zwei Werkzeugkerne voneinander getrennte, also zwischen den wenigstens zwei Werkzeugkernen angeordnete, wenigstens zwei Bereiche des thermoplastischen Kunststoffmaterials injiziert, um in jedem dieser Bereiche jeweils einen geschlossenen Hohlraum auszubilden.

Dieses Herstellverfahren ermöglicht es, auch bei einer komplizierten Struktur des Halteelements, insbesondere in der Umgebung der Durchgangsöffnungen (beispielsweise Sacklöcher), eine ausreichende und gleichmäßige Wandstärke des Haltelements in allen Bereichen zu gewährleisten.

Grundsätzlich können bei dem erfindungsgemäßen Herstellverfahren bekannte Spritzgieß-Sonderverfahren, wie z.B. GIT (Gasinjektionstechnik) oder WIT (Wasserinjektionstechnik), die beispielsweise in der DE-A-10 2005 062 825 und der DE-A-10 2007 041 982 beschrieben werden, eingesetzt werden. Bei diesen Verfahren wird die Kavität eines Spritzgießwerkzeugs nur teilweise gefüllt und dann in die Schmelze des Kunststoffmaterials ein Gas (GIT) bzw. Wasser (WIT) oder eine andere geeignete Flüssigkeit injiziert, um so den thermoplastischen Kunststoff aufzuweiten bzw. "aufzublasen", bis er gleichmäßig an den Wänden der Kavität anliegt und im Inneren des Kunststoffs ein Hohlraum entstanden ist. Nach dem Aushärten oder Erstarren des Bauteils und vor dem Entformen desselben kann das Gas bzw. das Wasser durch eine für die Injektion des Aufweitungsmaterials verwendete Injektionsöffnung abgelassen oder abgesaugt werden. Verbliebenes Gas mit geringem Druck kann nach dem Auswerfen des Bauteils durch die Injektionsöffnung in die Umgebung entweichen, während das Wasser bzw. die andere geeignete Flüssigkeit vorzugsweise vollständig abgesaugt wird. Hierbei kann die resultierende Wandstärke des Halteelements durch die Menge der in das Spritzgießwerkzeug eingebrachten Schmelze, die Art und den Druck des injizierten Aufweitungsmaterials und lokal durch das Maß der Abkühlung an der Werkzeugwand gesteuert werden. Die für das Aushärten bzw. Erstarren des thermoplastischen Kunststoffmaterials erforderliche Zeit kann somit erheblich durch die Temperatur des Aufweitungsmaterials beeinflusst werden und folglich präzise gesteuert werden.

Die bei einem solchen Verfahren in dem Halteelement entstehenden Injektionsöffnungen können in dem Element verbleiben oder nach dem Injektionsvorgang, beispielsweise durch geeignete Abdeckungen aus thermoplastischem Kunststoff oder durch Umformung von beim Spritzgießen angeformten thermoplastischem Material, z.B. in Form eines Kragens um die Injektionsöffnung, mittels Warmverstemmen oder dergleichen, verschlossen werden, um so geschlossene Hohlräume ohne Öffnungen auszubilden.

Bei den aus der Technik bekannten Verfahren, wie beispielsweise GIT und WIT, ergibt sich hierbei jedoch das Problem, dass sich insbesondere in der Umgebung der Durchgangsöffnungen keine ausreichende und gleichmäßige Wandstärke des Halteelements ausbildet. Besonders die Werkzeugkerne zum Ausbilden der Durchgangsöffnungen werden bei diesen Verfahren so stark erhitzt, dass die Schmelze in deren Umgebung nicht ausreichend abkühlt und sich folglich in diesen Bereichen des Halteelements nur eine geringe Wandstärke ausbildet. Außerdem wird in diesem Bereich der mögliche Hohlraum so gering, dass ein Aufweiten des thermoplastischen Materials an diesen Engstellen nicht gleichmäßig möglich ist. Somit können in dem Halteelement Schwachstellen entstehen, die bei der Verwendung der Federunterlage, beispielsweise für ein Federlager eines Kraftfahrzeugs, durch die hohen äußeren Kräfte zu einer Beschädigung oder gar Zerstörung der Federunterlage führen können.

Dieses Problem wird durch das erfindungsgemäße Herstellverfahren dadurch gelöst, dass zum einen die Werkzeugkerne, beispielsweise durch eine Hochleistungs-Hot-Spot-Kühlung, stark abgekühlt werden, so dass dort die Ausbildung einer ausreichenden Wandstärke gewährleistet wird, und zum anderen das Aufweitungsmaterial getrennt bzw. einzeln in die zwischen den Werkzeugkernen angeordneten Bereiche oder Segmente des thermoplastischen Kunststoffmaterials injiziert wird, so dass sich in jedem dieser Bereiche jeweils ein geschlossener Hohlraum ausbildet, wobei die so gebildeten Hohlräume voneinander getrennt sind. Auf diese Weise entsteht in der Umgebung der Durchgangsöffnungen eine stabile Wand mit definierter Dicke. Außerdem wird durch die Kühlung der Werkzeugkerne eine schnelle Erstarrung der Schmelze erreicht, so dass ein Durchbrechen der Gas- bzw. Wasserblasen von einem Bereich oder Segment in einen anderen zuverlässig verhindert wird. Damit die zur Verfügung stehende Schmelze in allen Bereichen für das Aufweiten des Kunststoffmaterials ausreichend vorhanden ist, kann das Angusssystem entsprechend ausgelegt werden, beispielsweise indem ein passend dimensionierter Anschnitt je Bereich vorgesehen wird.
Das Herstellverfahren gemäß der Erfindung bietet somit eine einfache und kostengünstige Herstellung der erfindungsgemäßen Federunterlage und ermöglicht einen geringeren Materialverbrauch, eine geringere Kühlzeit durch die Vermeidung von Masseanhäufungen sowie durch die verbesserte Kühlung, einerseits von außen durch die Hochleistungskühlung und andererseits von Innen durch das injizierte Aufweitungsmaterial, und einen geringeren Schließkraftbedarf, da der Nachdruck durch den Druck des injizierten Aufweitungsmaterials ersetzt werden kann.

Mit Hilfe des erfindungsgemäßen Verfahrens lassen sich auch für die Elastomerkomponente der Materialeinsatz und die Vulkanisierzeit verringern, da bei der aus der Technik bekannten Federunterlage auch diese Komponente teilweise unnötig dick ist, weil dort sonst die Masseanhäufung beim Thermoplast noch größer gemacht werden müsste. Falls aber das Halteelement gemäß der vorliegenden Erfindung als Hohlkörper ausgeführt wird, kann - ohne Masseanhäufungen - die Außengeometrie des Halteelements so geändert werden, dass die Elastomerkomponente, also das Federauflageelement, überall auf die technisch erforderliche Wandstärke reduziert werden kann. Insgesamt kann auf diese Weise verglichen mit den aus der Technik bekannten Federunterlagen eine Gewichtsverringerung der Federunterlage von ca. 20% bis 30% ermöglicht werden.

Vorzugsweise wird bei dem erfindungsgemäßen Herstellverfahren ein Gas, eine Flüssigkeit oder ein geschäumtes Material als Aufweitungsmaterial verwendet. Bei Verwendung eines Gases kann dieses bevorzugt gekühlt werden, um so eine noch schnellere Erstarrung der Schmelze zu ermöglichen, während bei Verwendung einer Flüssigkeit durch deren höhere Wärmekapazität ohnehin eine große Kühlwirkung vorhanden ist. Falls ein stark aufgeschäumtes Material als Aufweitungsmaterial verwendet wird, kann dieses z.B. mit dem Stieler-SmartFoam®-Verfahren in das Innere des thermoplastischen Kunststoffmaterials injiziert werden. Ein solcher Ansatz bietet die weiteren Vorteile, dass keine Injektoren in der Werkzeugkavität erforderlich sind, da das Gas zum Aufschäumen des Kernmaterials über einen Heißkanal zugeführt werden kann, dass durch rechtzeitiges Abschalten der Gasinjektion am Ende des Injektionsvorgangs wieder kompaktes Material injiziert werden kann, so dass die Wand des entstehenden Halteelements überall kompakt ist, also kein Injektionsloch im Bauteil verbleibt, dass durch die Ausfüllung mit geschäumtem Material und die geschlossene Wand bei Verwendung der Federunterlage keine Feuchtigkeit, Fremdkörper oder Verschmutzungen in das Innere des Halteelements eindringen können, und dass die Schaumstruktur zusätzlich die Festigkeit des Bauteils noch etwas erhöht. Bei Verwendung von CO₂ als Treibmittel für den Schaum bleibt auch die gute Kühlwirkung von innen erhalten.

Vorzugsweise wird zum Kühlen der Werkzeugkerne eine CO₂-Kühlung oder eine Stemke-Kühlung verwendet. Hierbei wird das CO₂ bzw. bei der Stemke-Kühlung ein aus der Klimatechnik bekanntes Kühlmittel, z.B. R404a, in flüssiger Form durch Kapillarröhren in den zu kühlenden Bereich geleitet und verdampft dort schlagartig durch Expansion. Durch den Phasenübergang wird der Umgebung zusätzlich eine große Menge Wärmeenergie entzogen. Auf diese Weise kann eine effiziente und schnelle Kühlung der Kerne und somit ein geeignetes Erstarren der Schmelze erzielt werden.

Die Stemke-Kühlung hat gegenüber der CO₂-Kühlung den Vorteil, dass das verdampfte Kühlmedium in einen Kompressor zurückgeführt und dort wieder verflüssigt wird, so dass es ohne Verbrauch im geschlossenen Kreislauf verwendet wird, während bei der CO₂-Kühlung das CO₂ nach dem Verdampfen in die Umgebung entweicht und somit ständig CO₂ verbraucht wird.

Das elastomere Kunststoffmaterial kann durch Anspritzen an das thermoplastische Kunststoffmaterial mittels Einlegen des ausgehärteten Halteelements in das Elastomerwerkzeug oder, falls das elastomere Kunststoffmaterial ein thermoplastisches Elastomer ist, in einem Zweikomponenten-Spritzgießverfahren an das thermoplastische Kunststoffmaterial angebracht werden. Im letzteren Fall kann eine weitere Verringerung der Herstellkosten durch die Vermeidung langer Vulkanisierungszeiten und eine vollautomatische Durchführung des Herstellverfahrens erzielt werden.

### Kurze Beschreibung der Zeichnungen

Nachfolgend wird die vorliegende Erfindung rein beispielhaft anhand der beigefügten Figuren beschrieben, wobei
Figuren 1(a) und (b) eine perspektivische Ansicht eines Kraftfahrzeugsstoßdämpfers mit der Federunterlage gemäß der Erfindung zeigen, wobei Figur 1(b) eine vergrößerte Ansicht des rechteckig umrahmten Bereichs der Figur 1(a) darstellt;
Figur 2 eine perspektivische Ansicht der in Figur 1 gezeigten Federunterlage von deren Oberseite aus zeigt;
Figur 3 eine perspektivische Ansicht der in Figur 1 gezeigten Federunterlage von deren Unterseite aus zeigt; und
Figuren 4(a) und (b) eine Querschnittsdarstellung der in Figur 1 gezeigten Federunterlage entlang der in Figur 2 gezeigten Linie A-A zeigen, wobei Figur 4(b) eine vergrößerte Darstellung des rechteckig umrahmten Bereichs der Figur 4(a) darstellt.

### Wege zur Ausführung der Erfindung

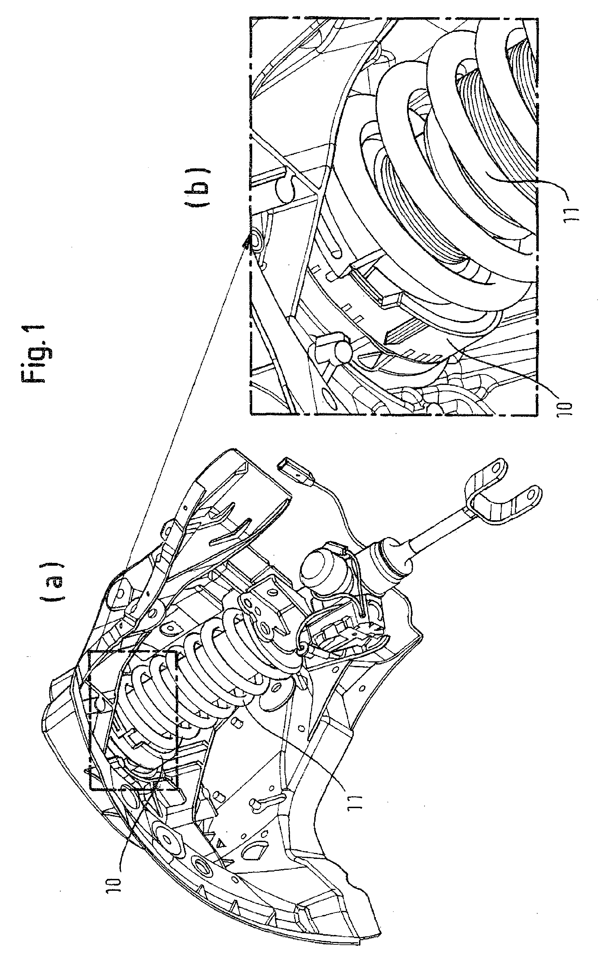

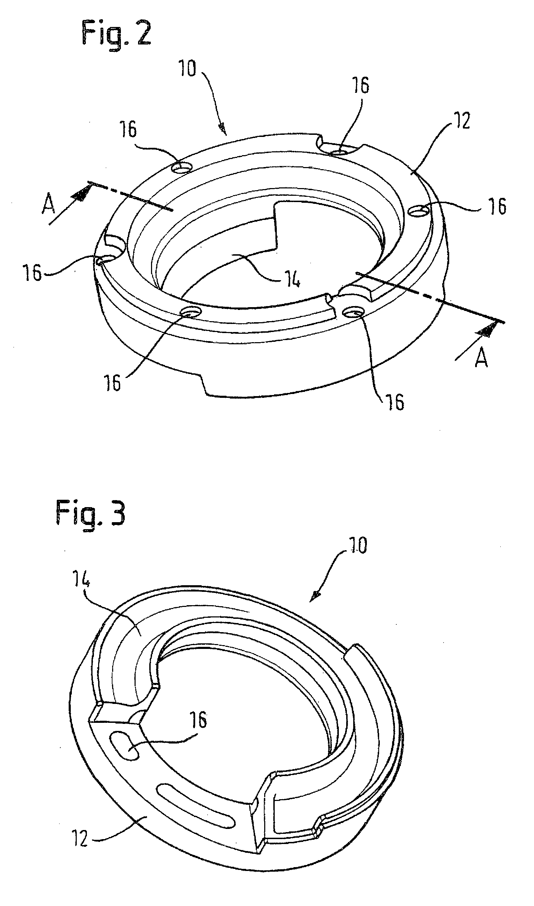

Figur 1 zeigt die erfindungsgemäße Federunterlage 10 im eingebauten Zustand in einem Federbeindom eines Kraftfahrzeugstoßdämpfers. Wie insbesondere aus Figur 1(b) ersichtlich ist, wird ein Ende der Stoßdämpferfeder 11 teilweise in der Federunterlage 10 aufgenommen, wo es an dem beispielsweise in Figur 3 gezeigten Federauflageelement 14 anliegt.

Der detaillierte Aufbau der Federunterlage 10 gemäß der vorliegenden Ausführungsform ist in Figuren 2-4 gezeigt. Die Federunterlage 10 weist neben dem oben erwähnten Federauflageelement 14 ein Halteelement 12 auf, wobei diese beiden Komponenten 12, 14 formschlüssig miteinander verbunden sind. Das Halteelement 12 besteht aus einem thermoplastischen Kunststoff, z.B. Polyamid mit hohem Glasfasergehalt (ca. 30% bis 50%) und das Federauflageelement 14 aus einem Elastomer, z.B. Styrol-Butadien-Kautschuk (SBR).

Das ringförmig ausgebildete Halteelement 12 weist Durchgangsöffnungen 16 auf, die sich von der Oberseite bis zur Unterseite des Halteelements 12 und teilweise auch durch das Federauflageelement 14 hindurch erstrecken und die Befestigung der Federunterlage 10 im Federbeindom durch geeignete Befestigungselemente, wie z.B. Schrauben oder Bolzen, ermöglichen.

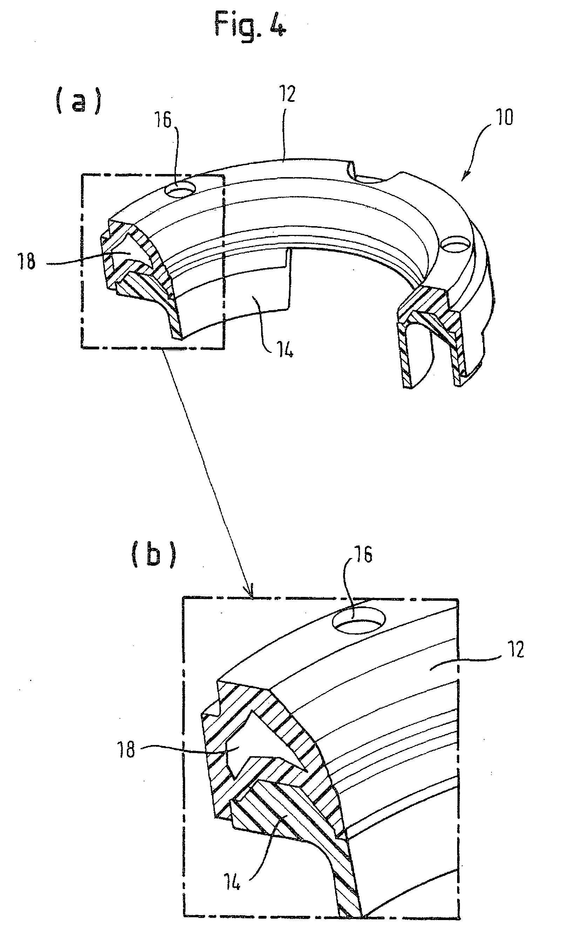

Wie in Figuren 4(a) und (b) gezeigt ist, ist das Halteelement 12 als Hohlkörper ausgebildet und weist zwischen den Durchgangsöffnungen 16 angeordnete Hohlräume 18 auf, die jeweils entlang eines Abschnitts des Halteelementumfangs verlaufen. Bei der vorliegenden Ausführungsform sind 6 Durchgangsöffnungen 16 und 6 voneinander in Umfangsrichtung des Halteelements 12 getrennte Hohlräume 18 vorgesehen, wobei jeder Hohlraum 18 jeweils zwischen zwei Durchgangsöffnungen 16 liegt und an diese angrenzt. Die Wandstärke der die Hohlräume 18 umgebenden Wände des Halteelements 12 ist im Wesentlichen einheitlich und beträgt 3 bis 5 mm.

Bei der vorliegenden Ausführungsform sind die Hohlräume 16 jeweils mit Luft gefüllt. Wie oben bereits beschrieben wurde, kann jedoch auch ein geschäumtes Material, wie beispielsweise ein geschäumter Kunststoff, zur Füllung der Hohlräume 18 verwendet werden. Je nach Einsatzgebiet der Federunterlage können unterschiedliche Hohlräume 18 auch jeweils mit unterschiedlichen, insbesondere z.T. Gasen enthaltende Aufweitungsmedien gefüllt werden.

Wie den Figuren 4(a) und (b) entnommen werden kann, bietet die Federunterlage 10 gemäß der Erfindung eine erhebliche Materialeinsparung und ermöglicht somit eine wesentliche Verringerung des Gewichts der Unterlage 10 sowie eine einfache und kostengünstige Herstellung derselben.

Zur Herstellung der in Figuren 1-4 gezeigten Ausführungsform der Federunterlage 10 kann beispielsweise ein GIT- oder WIT-Verfahren verwendet werden, bei dem während der Injektion des Aufweitungsmaterials, also des Gases, Wassers etc., in das thermoplastische Kunststoffmaterial die in diesem Fall 6 Werkzeugkerne des Spritzgießwerkzeugs durch eine CO₂- oder Stemke-Kühlung gekühlt werden und das Aufweitungsmaterial getrennt in die durch die Werkzeugkerne voneinander getrennten 6 Bereiche des thermoplastischen Kunststoffmaterials injiziert wird, um in jedem dieser Bereiche einen geschlossenen Hohlraum 18 auszubilden. Das elastomere Kunststoffmaterial des Federauflageelements 14 kann in einem Zweikomponenten-Spritzgießverfahren an das thermoplastische Kunststoffmaterial des Halteelements 12 angebracht werden.

Die bei einem solchen Verfahren in dem Halteelement 12 entstehenden Injektionsöffnungen können in dem Element 12 verbleiben oder nach dem Injektionsvorgang, beispielsweise mit entsprechenden Abdeckungen aus thermoplastischem Kunststoff, verschlossen werden, um so geschlossene Hohlräume 18 ohne Öffnungen auszubilden.

Die Erfindung ist nicht auf die beschriebene Ausführungsform beschränkt, sondern kann im Umfang der folgenden Ansprüche modifiziert werden.

## Patentansprüche

1. Federunterlage (10), insbesondere für ein Federlager eines Kraftfahrzeugs, umfassend
ein ringförmiges Halteelement (12) aus einem thermoplastischen Kunststoff und
ein Federauflageelement (14) aus einem elastomeren Kunststoff, das an dem Halteelement (12) angebracht ist, **dadurch gekennzeichnet, dass**
das Halteelement (12) wenigstens einen geschlossenen Hohlraum (18) aufweist.

2. Federunterlage (10) nach Anspruch 1, **dadurch gekennzeichnet, dass** das Halteelement (12) wenigstens eine Durchgangsöffnung (16) aufweist.

3. Federunterlage (10) nach Anspruch 2, **dadurch gekennzeichnet, dass** das Halteelement (12) wenigstens zwei Durchgangsöffnungen (16) und wenigstens zwei geschlossene Hohlräume (18) aufweist, die durch die wenigstens zwei Durchgangsöffnungen (16) voneinander getrennt sind.

4. Federunterlage (10) nach einem der vorhergehenden Ansprüche, **dadurch gekennzeichnet, dass** das Halteelement (12) und das Federauflageelement (14) formschlüssig oder stoffschlüssig miteinander verbunden sind.

5. Federunterlage (10) nach einem der vorhergehenden Ansprüche, **dadurch gekennzeichnet, dass** der wenigstens eine geschlossene Hohlraum (18) mit einem Gas gefüllt ist.

6. Federunterlage (10) nach einem der Ansprüche 1 bis 4, **dadurch gekennzeichnet, dass** der wenigstens eine geschlossene Hohlraum (18) wenigstens teilweise mit einem geschäumtem Material gefüllt ist.

7. Federunterlage (10) nach einem der vorhergehenden Ansprüche, **dadurch gekennzeichnet, dass** das Federauflageelement (14) aus einem thermoplastischen Elastomer besteht.

8. Verfahren zum Herstellen einer Federunterlage (10), insbesondere für ein Federlager eines Kraftfahrzeugs, umfassend ein ringförmiges Halteelement (12) aus einem thermoplastischen Kunststoff und ein Federauflageelement (14) aus einem elastomeren Kunststoff, das an dem Halteelement (12) angebracht ist, wobei das Verfahren die folgenden Schritte umfasst:
Einbringen einer Schmelze eines thermoplastischen Kunststoffmaterials in ein Spritzgießwerkzeug, wobei das Spritzgießwerkzeug wenigstens zwei Werkzeugkerne zum Ausbilden von wenigstens zwei Durchgangsöffnungen (16) in dem thermoplastischen Kunststoffmaterial aufweist;
Injizieren eines Aufweitungsmaterials zum Ausbilden eines geschlossenen Hohlraums (18) in die Schmelze des thermoplastischen Kunststoffmaterials; und
Anbringen eines elastomeren Kunststoffmaterials an das thermoplastische Kunststoffmaterial; wobei
während des Schritts des Injizierens des Aufweitungsmaterials die wenigstens zwei Werkzeugkerne gekühlt werden und das Aufweitungsmaterial getrennt in durch die wenigstens zwei Werkzeugkerne voneinander getrennte wenigstens zwei Bereiche des thermoplastischen Kunststoffmaterials injiziert wird, um in jedem dieser Bereiche jeweils einen geschlossenen Hohlraum (18) auszubilden.

9. Verfahren nach Anspruch 8, **dadurch gekennzeichnet, dass** das Aufweitungsmaterial ein Gas, insbesondere ein gekühltes Gas, eine Flüssigkeit oder ein geschäumtes Material ist.

10. Verfahren nach Anspruch 8 oder 9, **dadurch gekennzeichnet, dass** die Kühlung durch eine Stemke-Kühlung oder eine CO₂-Kühlung erfolgt.

11. Verfahren nach einem der Ansprüche 8 bis 10, **dadurch gekennzeichnet, dass** das elastomere Kunststoffmaterial durch Anspritzen an das ausgehärtete thermoplastische Kunststoffmaterial angebracht wird.

12. Verfahren nach einem der Ansprüche 8 bis 10, **dadurch gekennzeichnet, dass** das elastomere Kunststoffmaterial ein thermoplastisches Elastomer ist und in einem Zweikomponenten-Spritzgießverfahren an das thermoplastische Kunststoffmaterial angebracht wird.

## Claims

1. Spring support (10), in particular for a spring hanger of a motor vehicle, comprising an annular retaining element (12) of a thermoplastic material and
a spring bearing element (14) of an elastomeric material, applied to the retaining element (12),
**characterized in that**
the retaining element (12) has at least one closed hollow space (18).

2. Spring support (10) according to Claim 1, **characterized in that** the retaining element (12) has at least one through-opening (16).

3. Spring support (10) according to Claim 2, **characterized in that** the retaining element (12) has at least two through-openings (16) and at least two closed hollow spaces (18), which are separated from one another by the at least two through-openings (16).

4. Spring support (10) according to one of the preceding claims, **characterized in that** the retaining element (12) and the spring bearing element (14) are connected to each other in a form-fitting or material-bonded manner.

5. Spring support (10) according to one of the preceding claims, **characterized in that** the at least one closed hollow space (18) is filled with a gas.

6. Spring support (10) according to one of Claims 1 to 4, **characterized in that** the at least one closed hollow space (18) is at least partially filled with a foamed material.

7. Spring support (10) according to one of the preceding claims, **characterized in that** the spring bearing element (14) consists of a thermoplastic elastomer.

8. Method for producing a spring support (10), in particular for a spring hanger of a motor vehicle, comprising an annular retaining element (12) of a thermoplastic material and a spring bearing element (14) of an elastomeric material, applied to the retaining element (12), the method comprising the following steps:
introducing a melt of a thermoplastic material into an injection mould, the injection mould having at least two mould cores for forming at least two through-openings (16) in the thermoplastic material;
injecting an expansion material for forming a closed hollow space (18) into the melt of the thermoplastic material; and
applying an elastomeric material to the thermoplastic material; wherein
during the step of injecting the expansion material, the at least two mould cores are cooled and the expansion material is injected separately into at least two areas of the thermoplastic material separated from each other by the at least two mould cores, to form a closed hollow space (18) in each of these areas.

9. Method according to Claim 8, **characterized in that** the expansion material is a gas, in particular a cooled gas, a liquid or a foamed material.

10. Method according to Claim 8 or 9, **characterized in that** the cooling is carried out by Stemke cooling or CO₂ cooling.

11. Method according to one of Claims 8 to 10, **characterized in that** the elastomeric material is applied by injection-moulding onto the cured thermoplastic material.

12. Method according to one of Claims 8 to 10, **characterized in that** the elastomeric material is a thermoplastic elastomer and is applied to the thermoplastic material in a two-component injection-moulding process.

## Revendications

1. Support à ressort (10), en particulier pour un palier à ressort d'un véhicule automobile, comprenant:
un élément de maintien annulaire (12) en une matière synthétique thermoplastique, et
un élément d'appui de ressort (14) en une matière synthétique élastomère, qui est déposé sur l'élément de maintien (12),
**caractérisé en ce que** l'élément de maintien (12) présente au moins une cavité fermée (18).

2. Support à ressort (10) selon la revendication 1, **caractérisé en ce que** l'élément de maintien (12) présente au moins une ouverture traversante (16).

3. Support à ressort (10) selon la revendication 2, **caractérisé en ce que** l'élément de maintien (12) présente au moins deux ouvertures traversantes (16) et au moins deux cavités fermées (18), qui sont séparées l'une de l'autre par lesdites au moins deux ouvertures traversantes (16).

4. Support à ressort (10) selon l'une quelconque des revendications précédentes, **caractérisé en ce que** l'élément de maintien (12) et l'élément d'appui de ressort (14) sont assemblés l'un à l'autre par emboîtement ou par liaison matérielle.

5. Support à ressort (10) selon l'une quelconque des revendications précédentes, **caractérisé en ce que** ladite au moins une cavité fermée (18) est remplie d'un gaz.

6. Support à ressort (10) selon l'une quelconque des revendications 1 à 4, **caractérisé en ce que** ladite au moins une cavité fermée (18) est remplie au moins en partie d'un matériau expansé.

7. Support à ressort (10) selon l'une quelconque des revendications précédentes, **caractérisé en ce que** l'élément d'appui de ressort (14) est constitué d'un élastomère thermoplastique.

8. Procédé de fabrication d'un support à ressort (10), en particulier pour un palier à ressort d'un véhicule automobile, comprenant un élément de maintien annulaire (12) en une matière synthétique thermoplastique et un élément d'appui de ressort (14) en une matière synthétique élastomère, qui est déposé sur l'élément de maintien (12), dans lequel le procédé comprend les étapes suivantes:
introduire une masse fondue d'un matériau de matière synthétique thermoplastique dans un outil de moulage par injection, l'outil de moulage par injection présentant au moins deux noyaux d'outil destinés à former au moins deux ouvertures traversantes (16) dans le matériau de matière synthétique thermoplastique;
injecter un matériau d'expansion destiné à former une cavité fermée (18) dans la masse fondue du matériau de matière synthétique thermoplastique; et
déposer un matériau de matière synthétique élastomère sur le matériau de matière synthétique thermoplastique; dans lequel
pendant l'étape d'injection du matériau d'expansion, on refroidit lesdits au moins deux noyaux d'outil et on injecte le matériau d'expansion de façon séparée dans au moins deux régions du matériau de matière synthétique thermoplastique séparées par lesdits au moins deux noyaux d'outil, afin de former respectivement une cavité fermée (18) dans chacune de ces régions.

9. Procédé selon la revendication 8, **caractérisé en ce que** le matériau d'expansion est un gaz, en particulier un gaz refroidi, un liquide ou un matériau expansé.

10. Procédé selon la revendication 8 ou 9, **caractérisé en ce que** l'on effectue le refroidissement au moyen d'un refroidissement Stemke ou d'un refroidissement au CO₂.

11. Procédé selon l'une quelconque des revendications 8 à 10, **caractérisé en ce que** le matériau de matière synthétique élastomère est déposé par projection sur le matériau de matière synthétique thermoplastique durci.

12. Procédé selon l'une quelconque des revendications 8 à 10, **caractérisé en ce que** le matériau de matière synthétique élastomère est un élastomère thermoplastique et on le dépose sur le matériau de matière synthétique thermoplastique par un procédé de moulage par injection à deux composants.
